# EUROPEAN PATENT APPLICATION

(11) **EP 4 516 645 A1**
(43) Date of publication of application: **05.03.2025**
(21) Application number: 23794903.7
(22) Date of filing: 27.03.2023
(51) Int. Cl.: B62D 25/20, B62D 21/02

(54) **VEHICLE AND INTEGRALLY DIE-CAST REAR FLOOR FOR VEHICLE**

(30) Priority: 29.04.2022 CN 202221031068 U
(71) Applicant: Nio Technology (Anhui) Co., Ltd, Hefei City, Anhui 230601 (CN)
(72) Inventor: QI, Tenglong, Shanghai 201804 (CN); CHENG, Ming, Shanghai 201804 (CN); SHEN, Xuekai, Shanghai 201804 (CN); HU, Xianbing, Shanghai 201804 (CN); KANG, Xueyun, Shanghai 201804 (CN); LIU, Huachu, Shanghai 201804 (CN); RONG, Bao, Shanghai 201804 (CN); SUI, Yongle, Shanghai 201804 (CN); ZENG, Yaping, Shanghai 201804 (CN); JIANG, Nan, Shanghai 201804 (CN); LIU, Jing, Shanghai 201804 (CN)
(74) Representative: Vossius & Partner Patentanwälte Rechtsanwälte mbB
(86) International application number: PCT/CN2023/084126
(87) International publication number: WO 2023/207468

(57) **Abstract**

An integrated die-cast rear floor (1) for a vehicle is provided, including a main body portion and a reinforcement rib portion arranged on the main body portion, where the reinforcement rib portion includes a plurality of reinforcement rib units (33), and at least some of the plurality of reinforcement rib units are arranged on a side of the main body portion facing a lower side of the vehicle. A vehicle is provided, including an integrated die-cast rear floor for a vehicle. The integrated die-cast rear floor for a vehicle can effectively solve the problem of electrophoresis liquid accumulation, and further solves the surface quality problem caused by electrophoresis liquid accumulation, and is high in production efficiency and low in cost.

## Description

The disclosure claims the priority to Chinese Patent Application No. CN 202221031068.2, filed on April 29, 2022, which is incorporated herein by reference in its entirety.

### Technical Field

The disclosure relates to the technical field of vehicles, and in particular, to a vehicle and an integrated die-cast rear floor for a vehicle.

### Background Art

For a conventional vehicle design, a rear floor assembly is usually composed of dozens of sheet metal stamping parts welded or screwed together. There are many parts and components, and correspondingly a large number of molds are involved, causing a long production process chain, and large cumulative tolerances, which affects the quality of the whole vehicle. In addition, some parts subject to great forces need to be locally strengthened by increasing the material thickness and adjusting the material, thus the weight of the whole vehicle is very large.

As an improvement, a patent application with the publication No. CN 113998009 A provides a vehicle and a rear floor skeleton assembly thereof. Specifically, the rear floor skeleton assembly includes a left longitudinal beam, a right longitudinal beam, a front cross beam, a middle cross beam, a rear cross beam, a middle left longitudinal beam and a middle right longitudinal beam. Two ends of the front cross beam are respectively connected to a front end of the left longitudinal beam and a front end of the right longitudinal beam. Two ends of the middle cross beam are respectively connected to the middle of the left longitudinal beam and the middle of the right longitudinal beam. Two ends of the rear cross beam are respectively connected to a rear end of the left longitudinal beam and a rear end of the right longitudinal beam. The middle left longitudinal beam and the middle right longitudinal beam are both connected between the front cross beam and the middle cross beam, the middle left longitudinal beam gradually extends to the right in a direction from back to front, and a rear end of the middle left longitudinal beam is arranged close to an intersection of the middle cross beam and the left longitudinal beam so that the left longitudinal beam and the middle left longitudinal beam jointly form a left Y-type force transfer structure. The middle right longitudinal beam gradually extends to the left in the direction from back to front, and a rear end of the middle right longitudinal beam is arranged close to an intersection of the middle cross beam and the right longitudinal beam so that the right longitudinal beam and the middle right longitudinal beam jointly form a right Y-type force transfer structure. A first left reinforcement structure and a second left reinforcement structure extending upwards and parallel to each other are arranged on the left longitudinal beam at the intersection of the left longitudinal beam and the middle cross beam. A first right reinforcement structure and a second right reinforcement structure extending upwards and parallel to each other are arranged on the right longitudinal beam at the intersection of the right longitudinal beam and the middle cross beam. Both the first left reinforcement structure and the second left reinforcement structure are connected to a left rear wheel cover assembly of the vehicle, and both the first right reinforcement structure and the second right reinforcement structure are connected to a right rear wheel cover assembly of the vehicle.

In can be known from the technical solution provided by the above patent document that the integration of a plurality of independent sheet metal parts is achieved by adopting an integrated die-cast method, which greatly reduces the number of parts, simplifies the production process and improves the assembly efficiency. However, the rear floor skeleton assembly of this structure still has problems. The cleaning liquid is not easy to be drained from the casting part in the subsequent electrophoresis process, which affects the surface quality of the casting part.

### Summary

The disclosure is intended to solve or at least alleviate the technical problem mentioned above, that is, at least solve or alleviate the problem that the existing integrated die-cast rear floor is prone to quality defects in an electrophoresis process.

In a first aspect, the disclosure provides an integrated die-cast rear floor for a vehicle. The rear floor includes a main body portion and a reinforcement rib portion arranged on the main body portion, the reinforcement rib portion includes a plurality of reinforcement rib units, and at least some of the plurality of reinforcement rib units are arranged on a side of the main body portion facing a lower side of the vehicle.

According to the integrated die-cast rear floor for a vehicle provided in the disclosure, by arranging at least some of the reinforcement rib units on the side of the main body portion facing the lower side of the vehicle, it is possible to avoid a puddling issue caused by the blocking of the reinforcement ribs during the electrophoresis process, while the strength of the rear floor is ensured to be not reduced, thereby effectively solving the surface quality problem of the existing integrated die-cast rear floor that is easily caused by electrophoresis liquid accumulation during the electrophoresis process. In addition, compared with a conventional skeleton structure with a closed cross-section formed by connecting a U-shaped sheet metal to a cover plate, since the integrated die-cast rear floor in the disclosure requires no additional leakage hole or special plugging member to plug the leakage hole, the whole vehicle has better sealing performance and better sound insulation against tire noises and road noises. Further, since the reinforcement rib unit is arranged on the side of the main body portion facing the lower side of the vehicle, the height, thickness, quantity and the like of the reinforcement rib unit may be adjusted to modify local structural strengths of the rear floor, thereby improving the efficiency during trial mold and production stages and reducing the production cost.

For the integrated die-cast rear floor for a vehicle described above, in some feasible embodiments, the main body portion includes a left longitudinal beam, a right longitudinal beam, a middle cross beam and a rear cross beam, and the reinforcement rib unit arranged on the side of the main body portion facing the lower side of the vehicle is arranged at least on the middle cross beam.

With such configuration, the structural strength of the middle cross beam with a large area can be improved. In addition, it is more likely for the middle cross beam to have the problem of electrophoresis liquid accumulation due to a large area thereof, and solutions of the disclosure can solve this problem well.

For the integrated die-cast rear floor for a vehicle described above, in some feasible embodiments, at least some of the reinforcement rib units arranged on the side of the main body portion facing the lower side of the vehicle extend downwards from a surface of the main body portion.

With such configuration, the processing difficulty of the rear floor can be further reduced without the accumulation of the cleaning fluid.

It can be understood that for a non-planar main body portion, the reinforcement rib unit may be arranged at a certain inclination angle.

For the integrated die-cast rear floor for a vehicle described above, in some feasible embodiments, the left longitudinal beam and the right longitudinal beam respectively extend upwards at positions opposite each other to form a damper mounting portion.

By integrally forming the damper mounting portion with the left and right longitudinal beams, compared with the solution adopting an independent damper mounting base, the overall structure of the rear floor is simplified, and it is also conducive to uniform distribution of the force applied to the damper mounting portion by the damper, thereby improving the support capacity of the damper mounting portion.

It should be noted that the damper mounting portion is configured to mount a rear damper.

For the integrated die-cast rear floor for a vehicle described above, in some feasible embodiments, the damper mounting portion includes a left damper mounting portion formed on the left longitudinal beam, and a longitudinal dimension of the left damper mounting portion on a side close to the left longitudinal beam is greater than a longitudinal dimension of the left damper mounting portion on a side away from the left longitudinal beam; and/or
the damper mounting portion includes a right damper mounting portion formed on the right longitudinal beam, and a longitudinal dimension of the right damper mounting portion on a side close to the right longitudinal beam is greater than a longitudinal dimension of the right damper mounting portion on a side away from the right longitudinal beam.

Compared with a conventional damper mounting base of an inverted T-shaped structure, in the disclosure, by configuring lower parts of the left damper mounting portion and the right damper mounting portion to have longitudinal dimensions larger than longitudinal dimensions of upper parts of the left damper mounting portion and the right damper mounting portion, that is, by configuring the damper mounting portion to have a structure in an approximate triangular shape, it is possible to improve the support stability, and it is also conducive to uniform distribution of the force on the damper mounting portion through the corresponding longitudinal beams, so as to achieve a better shock absorption effect, thereby enhancing the torsional performance and ride comfort of the whole vehicle.

For the integrated die-cast rear floor for a vehicle described above, in some feasible embodiments, the damper mounting portion has a plurality of damper mounting points, and at least one of the plurality of damper mounting points is arranged such that a horizontal distance between the damper mounting point and the rear cross beam is greater than a horizontal distance between a rear edge line of the middle cross beam and the rear cross beam.

With such configuration, at least a portion of the middle cross beam can be arranged in the same vertical plane as the left damper mounting point and the right damper mounting point. When the body in white is assembled, the body, the damper mounting point and the middle cross beam can form a closed annular structure in the vertical plane, which is beneficial for improving the structural strength of the whole vehicle, and the bending and torsional performance of the whole vehicle can also be enhanced to some extent.

For the integrated die-cast rear floor for a vehicle described above, in some feasible embodiments, the left longitudinal beam, the right longitudinal beam and the middle cross beam are connected to from a notch.

Compared with a conventional structure of closing the front end of the rear floor with the front cross beam, the rear floor provided in the disclosure is constructed with a large opening structure at the front end thereof, so that a gate during the casting process can be arranged in the area of the notch or in an area close to the notch, thereby ensuring that an aluminum liquid flows from the front of the vehicle to the rear of the vehicle during the casting process, increasing an area of a flow channel when the aluminum liquid is injected, and improving the efficiency of aluminum liquid injection. In addition, casting parts obtained in this way have better quality and better performance. Compared with a conventional front-end closed solution, the performance of the casting parts can be enhanced by about 8% to 15%.

For the integrated die-cast rear floor for a vehicle described above, the rear floor is provided with a first seat mounting point close to a front end thereof.

By arranging the first seat mounting point at a position close to the front end of the rear floor, that is, mounting the seat directly on the rear floor, the mounting of the seat can be more convenient.

It can be understood that the first seat mounting point may be arranged only at a position close to the front end of the middle cross beam, or may be arranged on each of the middle cross beam, the left longitudinal beam and the right longitudinal beam.

For the integrated die-cast rear floor for a vehicle described above, in some feasible embodiments, the vehicle further includes a rear sheet metal part arranged on the rear floor, and the rear cross beam is connected to the rear sheet metal part through a fastener.

In a frame structure formed by connecting the left longitudinal beam, the right longitudinal beam, the middle cross beam and the rear cross beam, a blank area between the middle cross beam and the rear cross beam needs to be closed through the rear sheet metal part. The rear sheet metal part and the rear floor can be connected by means of welding, a fastener or a combination of welding and a fastener. The fastener is usually a bolt, a stud, etc.

For the integrated die-cast rear floor for a vehicle described above, in some feasible embodiments, the rear cross beam is provided with at least one fastener mounting point for connecting with the rear sheet metal part, the rear sheet metal part is provided with at least one second seat mounting point, and the fastener mounting point does not overlap with the second seat mounting point.

With such configuration, in which the seat is connected to the rear sheet metal part, then the rear sheet metal part is connected to the rear floor, and the fastener mounting point does not overlap with the second seat mounting point, i.e., the second seat mounting point is not arranged directly on the rear floor and there is a distance between the second seat mounting point and the fastener mounting point, if the seat is in pulling, collision or other working conditions, and if the second seat mounting point is subjected to a large impact force, the impact force can be cushioned and absorbed through sufficient deformation of the rear sheet metal part, so that the impact force between the seat, the rear sheet metal part and the rear floor is relatively uniform, thereby better protecting the seat, the rear sheet metal part and the rear floor from damage.

In addition, the corresponding vehicle integrates mounting points for the second row of seats and the third row of seats, so that it can be used on 5-seat, 6-seat and 7-seat saloons or SUVs, thereby greatly shortening the development cycle of different models.

For the integrated die-cast rear floor for a vehicle described above, in some feasible embodiments, the main body portion is provided with a plurality of grip portions for engaging with a gripping tool.

In the production process of a large part, it is usually necessary to transfer the part. For a grip structure of the part, the grip portion of a conventional casting part is a biscuit position of a casting blank. However, in the large part, since the biscuit is far away from the body of the part, a cantilever beam structure will be formed during the gripping process, causing the body of the part to deform. In the disclosure, by providing the main body portion with a plurality of grip portions for engaging with the gripping tool, and evenly distributing the plurality of grip portions on the main body portion of the rear floor, the cantilever structure can be avoided during the gripping process, thereby solving the problem of deformation and ensuring the quality of the casting part.

It can be understood that the grip portion may have various structural forms, such as a protrusion, a recess, etc.

For the integrated die-cast rear floor for a vehicle described above, in some feasible embodiments, the grip portions are arranged at least at positions close to four corners of the main body portion.

By arranging the grip portions at least at the positions close to the four corners of the main body portion, during the gripping process, the cantilever structure of the rear floor can be avoided and thus the problem of deformation is solved.

It can be understood that, in addition to arranging the grip portions at the positions close to the four corners of the main body portion, an additional grip portion may be further disposed in the middle of the main body portion, for example, the front ends of the left longitudinal beam and the right longitudinal beam, the middle cross beam and the rear cross beam are each provided with the grip portion.

In a second aspect, the disclosure further provides a vehicle including an integrated die-cast rear floor for a vehicle according to any one of the technical solutions described above.

It can be understood by those skilled in the art that since the vehicle is equipped with the integrated die-cast rear floor for a vehicle described above, the vehicle has all the technical effects that can be achieved by the rear floor described above, which will not be described here again.

Solution 1. An integrated die-cast rear floor for a vehicle, including a main body portion and a reinforcement rib portion arranged on the main body portion, where the reinforcement rib portion includes a plurality of reinforcement rib units, and at least some of the plurality of reinforcement rib units are arranged on a side of the main body portion facing a lower side of the vehicle.

Solution 2. The integrated die-cast rear floor for a vehicle according to Solution 1, where the main body portion includes a left longitudinal beam, a right longitudinal beam, a middle cross beam and a rear cross beam, and the reinforcement rib unit arranged on the side of the main body portion facing the lower side of the vehicle is arranged at least on the middle cross beam.

Solution 3. The integrated die-cast rear floor for a vehicle according to Solution 1, where at least some of the reinforcement rib units arranged on the side of the main body portion facing the lower side of the vehicle extend downwards from a surface of the main body portion.

Solution 4. The integrated die-cast rear floor for a vehicle according to Solution 2, where the left longitudinal beam and the right longitudinal beam respectively extend upwards at positions opposite each other to form a damper mounting portion.

Solution 5. The integrated die-cast rear floor for a vehicle according to Solution 4, where the damper mounting portion includes a left damper mounting portion formed on the left longitudinal beam, and a longitudinal dimension of the left damper mounting portion on a side close to the left longitudinal beam is greater than a longitudinal dimension of the left damper mounting portion on a side away from the left longitudinal beam; and/or
the damper mounting portion includes a right damper mounting portion formed on the right longitudinal beam, and a longitudinal dimension of the right damper mounting portion on a side close to the right longitudinal beam is greater than a longitudinal dimension of the right damper mounting portion on a side away from the right longitudinal beam.

Solution 6. The integrated die-cast rear floor for a vehicle according to Solution 4, where the damper mounting portion has a plurality of damper mounting points, and at least one of the plurality of damper mounting points is arranged such that a horizontal distance between the damper mounting point and the rear cross beam is greater than a horizontal distance between a rear edge line of the middle cross beam and the rear cross beam.

Solution 7. The integrated die-cast rear floor for a vehicle according to Solution 2, where the left longitudinal beam, the right longitudinal beam and the middle cross beam are connected to from a notch.

Solution 8. The integrated die-cast rear floor for a vehicle according to Solution 2, where the rear floor is provided with a first seat mounting point close to a front end thereof.

Solution 9. The integrated die-cast rear floor for a vehicle according to Solution 2, where the vehicle further includes a rear sheet metal part arranged on the rear floor, and the rear cross beam is connected to the rear sheet metal part through a fastener.

Solution 10. The integrated die-cast rear floor for a vehicle according to Solution 9, where the rear cross beam is provided with at least one fastener mounting point for connecting with the rear sheet metal part, the rear sheet metal part is provided with at least one second seat mounting point, and the fastener mounting point does not overlap with the second seat mounting point.

Solution 11. The integrated die-cast rear floor for a vehicle according to Solution 1, where the main body portion is provided with a plurality of grip portions for engaging with a gripping tool.

Solution 12. The integrated die-cast rear floor for a vehicle according to Solution 11, where the grip portions are arranged at least at positions close to four corners of the main body portion.

Solution 13. A vehicle, including an integrated die-cast rear floor for a vehicle according to any one of Solutions 1 to 12.

### Brief Description of the Drawings

The disclosed content of the disclosure will become more readily understood with reference to the accompanying drawings. Those skilled in the art readily understand that: the accompanying drawings are merely for the purpose of illustration, and are not intended to limit the scope of protection of the disclosure. In addition, like numerals are used to designate like components in the drawings in which:
FIG. 1 is an isometric view of an integrated die-cast rear floor according to an embodiment of the disclosure;
FIG. 2 is a cross-sectional view along line A-A in FIG. 1;
FIG. 3 is a top view of FIG. 1;
FIG. 4 is a left view of FIG. 1;
FIG. 5 is a schematic diagram showing a flow direction of an aluminum liquid during casting of an integrated die-cast rear floor according to an embodiment of the disclosure;
FIG. 6 is a schematic diagram showing a connection structure of an integrated die-cast rear floor and a rear sheet metal part according to an embodiment of the disclosure; and
FIG. 7 is a partial enlarged schematic diagram of section B in FIG. 6.

List of reference signs:
1. Rear floor; 10. Left longitudinal beam; 11. Left damper mounting portion; 110. Left damper mounting point; 12. First grip protrusion; 20. Right longitudinal beam; 21. Right damper mounting portion; 210. Right damper mounting point; 22. First grip protrusion; 30. Middle cross beam; 31. Notch; 32. Second grip protrusion; 33. Reinforcement rib unit; 34. First seat mounting point; 40. Rear cross beam; 41. Third grip protrusion; 42. Fastener mounting point; 2. Gate; 3. Rear sheet metal part; 4. Seat bracket; 5. Second seat mounting point.

### Detailed Description of Embodiments

Preferred implementations of the disclosure are described below with reference to the accompanying drawings. It should be understood by those skilled in the art that these implementations are only for explaining the technical principles of the disclosure and are not intended to limit the scope of protection of the disclosure.

In addition, to better illustrate the disclosure, numerous specific details are given in the following detailed implementations. It should be understood by those skilled in the art that the disclosure may be implemented without some specific details.

It should be noted that, in the description of the disclosure, the terms that indicate the directions or positional relationships, such as "front", "rear", "left", "right", "upper", "lower", "inner" and "outer", are based on the directions or positional relationships in actual application, and they are merely for ease of description instead of indicating or implying that the device or element must have a particular orientation and be constructed and operated in a particular orientation, and therefore, they should not be construed as limiting the disclosure.

In addition, it should also be noted that, in the description of the disclosure, the terms "mount" and "connect" should be interpreted in a broad sense unless explicitly defined and limited otherwise. For example, a connection may be a fixed connection, a detachable connection, or an integral connection; may be a mechanical connection or an electrical connection; or may be a direct connection, an indirect connection by means of an intermediate medium, or internal communication between two spaces. For those skilled in the art, the specific meanings of the foregoing terms in the disclosure can be interpreted according to a specific situation.

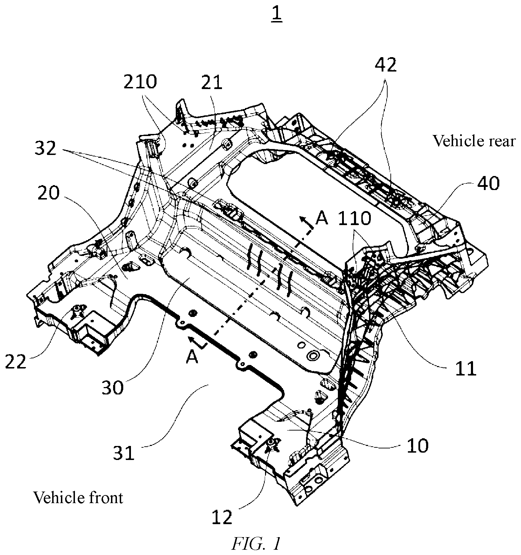

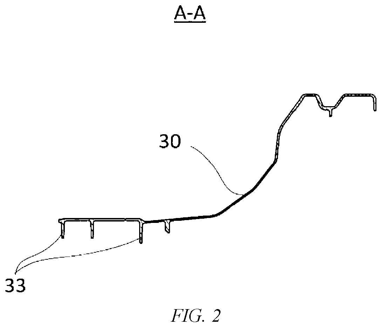

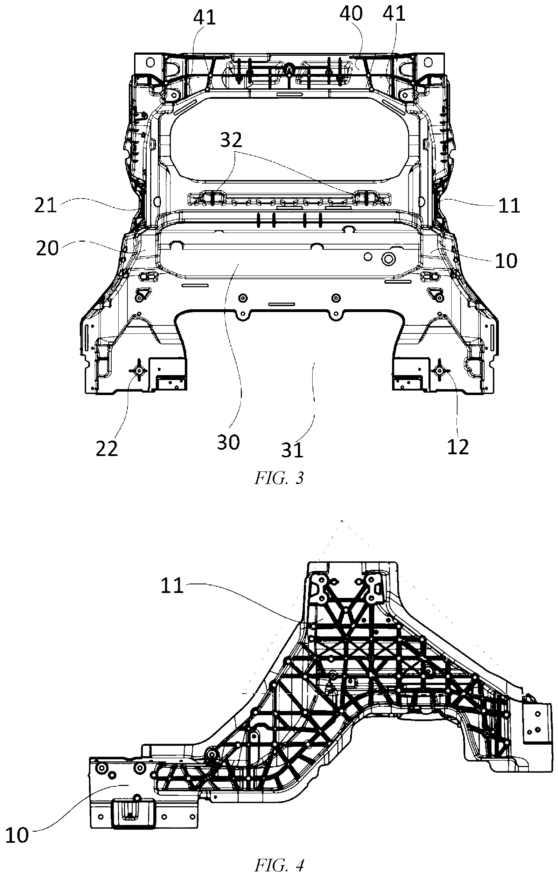

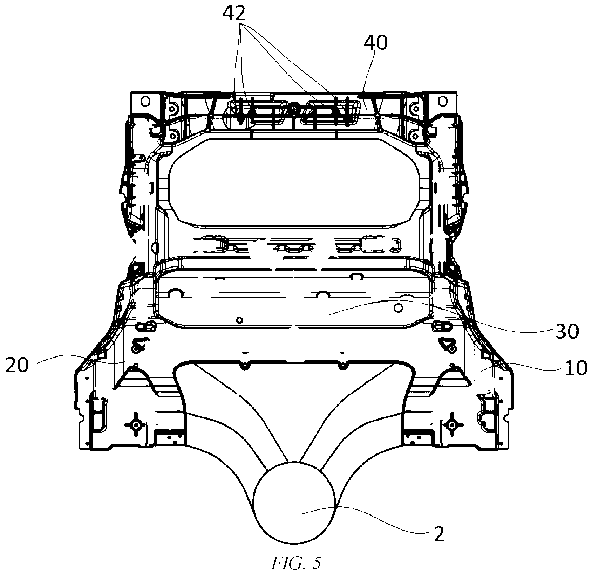

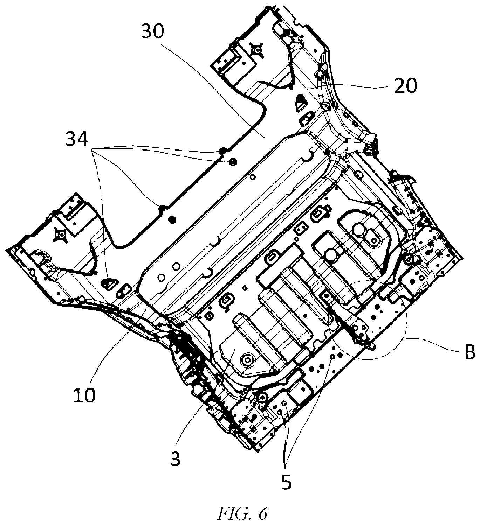

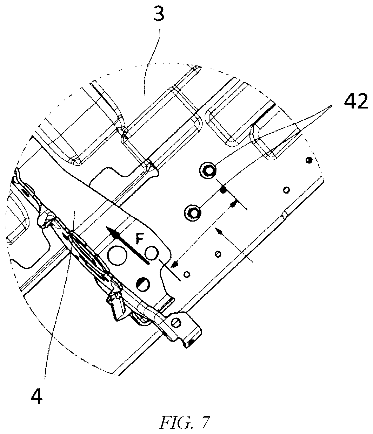

FIG. 1 is an isometric view of an integrated die-cast rear floor according to an embodiment of the disclosure; FIG. 2 is a cross-sectional view along line A-A in FIG. 1; FIG. 3 is a top view of FIG. 1; FIG. 4 is a left view of FIG. 1; FIG. 5 is a schematic diagram showing a flow direction of an aluminum liquid during casting of an integrated die-cast rear floor according to an embodiment of the disclosure; FIG. 6 is a schematic diagram showing a connection structure of an integrated die-cast rear floor and a rear sheet metal part according to an embodiment of the disclosure; and FIG. 7 is a partial enlarged schematic diagram of section B in FIG. 6.

An integrated die-cast rear floor according to an embodiment of the disclosure includes a main body portion and a reinforcement rib portion arranged on the main body portion, the main body portion and the reinforcement rib portion are integrally formed, and the reinforcement rib portion is configured to improve the structural strength of the main body portion. In this embodiment, the main body portion is of a non-planar structure, in order to avoid liquid accumulation in an electrophoresis process (after the electrophoresis process, the parts need to be cleaned, and the residual cleaning liquid will cause water marks on the surface of the parts, which affects the surface quality of the parts), some of a plurality of reinforcement rib units included in the reinforcement rib portion according to this embodiment are arranged on a lower side of the main body portion facing a vehicle, that is, arranged on a lower surface of the main body portion, thereby avoiding puddling and preventing the electrophoresis liquid accumulation from affecting the surface quality of the parts.

Specifically, as shown in FIG. 1, the main body portion is a frame structure formed by connecting a left longitudinal beam 10, a right longitudinal beam 20, a middle cross beam 30 and a rear cross beam 40, where the middle cross beam 30 has a large area. In this embodiment, reinforcement rib units 33 extending downwards are arranged on surfaces of at least the middle cross beam 30, the left longitudinal beam 10 and the right longitudinal beam 20 facing downwards. As shown in FIG. 2, FIG. 2 shows a structure of the reinforcement rib unit 33 arranged on the middle cross beam 30. The reinforcement rib unit 33 extends downwards, and the individual reinforcement rib units 33 intersect or do not intersect. As such, on the basis of improving the structural strength of the main body portion, the problem of puddling may be solved, thereby improving the surface quality of the parts.

Further, a rear floor 1 provided in this embodiment is further integrated with a damper mounting portion for mounting a damper. A conventional sheet metal assembled rear floor or an integrated die-cast rear floor mainly supports a damper with a damper mounting base fastened to the rear floor. In the embodiment of the disclosure, the damper mounting portion is integrally formed with the longitudinal beam, eliminating the need for an additional connecting structure. Therefore, the supporting performance may be enhanced, thereby improving the mounting stability of the damper.

Specifically, referring to FIG. 1 and FIG. 4, the left longitudinal beam 10 extends upwards to form a left damper mounting portion 11, and the right longitudinal beam 20 extends upwards at a position opposite to the left longitudinal beam 10 to form a right damper mounting portion 21 corresponding to the left damper mounting portion 11. A longitudinal dimension of the left damper mounting portion 11 on a side (i.e. a lower side) close to the left longitudinal beam 10 is greater than a longitudinal dimension thereof on a side (i.e. an upper side) away from the left longitudinal beam 10, and a longitudinal dimension of the right damper mounting portion 21 on a side (i.e. a lower side) close to the right longitudinal beam 20 is greater than a longitudinal dimension thereof on a side (i.e. an upper side) away from the right longitudinal beam 20, so that the damper mounting portion is approximately triangular in structure, thereby providing a stable support for the damper.

It should be noted that the longitudinal dimension is a dimension measured in the front-rear direction of the rear floor 1.

Further, a damper mounting point is formed on the damper mounting portion. The damper needs to be connected to the damper mounting portion by means of a fastener such as a bolt and a stud, and the damper mounting point is a point for mounting the fastener. It can be understood that in order to ensure stable mounting of the damper, a plurality of damper mounting points are usually required for mounting the damper on a single side, thus there are certain differences in the positions of the damper mounting points. In this embodiment, at least one of the plurality of damper mounting points is set such that a horizontal distance between the damper mounting point and the rear cross beam 40 is greater than a horizontal distance between a rear edge line of the middle cross beam 30 and the rear cross beam 40, therefore, at least a portion of the middle cross beam 30 can be located in the same vertical plane as the left damper mounting point 110 and the right damper mounting point 210. As such, a vertical cross-section where the vehicle body, the damper mounting point and the middle cross beam 30 are located is a closed annular structure, thereby improving the structural strength of the whole vehicle, and the bending and torsional performance of the whole vehicle is also enhanced to some extent.

Specifically, as shown in FIG. 1 and FIG. 3, viewing along the front-rear direction of the rear floor 1, a horizontal distance between a plurality of left damper mounting points 110 arranged on the left damper mounting portion 11 and the rear cross beam 40 is greater than a horizontal distance between the rear edge line of the middle cross beam 30 and the rear cross beam 40, and a horizontal distance between a plurality of right damper mounting points 210 arranged on the right damper mounting portion 21 and the rear cross beam 40 is greater than a horizontal distance between the rear edge line of the middle cross beam 30 and the rear cross beam 40, where a front edge line of the rear cross beam 40 serves as a comparison benchmark. In this way, after the body in white is connected, the structure of a vertical cross-section where the body in white, the damper mounting points and the middle cross beam 30 are located is a closed annular structure, which can improve the structural strength of the whole vehicle.

Further, in order to enhance the overall performance of the rear floor 1, the rear floor 1 in this embodiment is provided with a large opening structure at a front end thereof. As shown in FIG. 1 and FIG. 5, the left longitudinal beam 10, the right longitudinal beam 20 and the middle cross beam 30 are connected to form a notch 31. During the arrangement of a gate 2, the gate 2 is arranged in an area as close as possible to the notch 31. In this way, a flow channel for injecting an aluminum liquid may be more in contact with the front end of the rear floor 1, so as to increase the cross-sectional area of the flow channel for injection, thereby improving the injection efficiency, which is beneficial for casting molding. The rear floor 1 obtained in the case of this structure has better quality at the front end, and the mechanical performance of the front end can be enhanced by about 8% to 15% compared with the conventional rear floor 1.

Further, the rear floor 1 in this embodiment is provided with a plurality of first seat mounting points 34 at positions close to the front end thereof. The first seat mounting points 34 are configured to mount the second row of seats, i.e., the seats adjacent to the driver's seat and the front passenger seat. As shown in FIG. 6, first seat mounting points 34 are arranged on a portion close to the front end of the middle cross beam 30, the left longitudinal beam 10, and the right longitudinal beam 20. The plurality of first seat mounting points 34 are arranged in a transverse direction of the rear floor 1. If the vehicle is a 5-seat vehicle, the first seat mounting points 34 may be configured to mount a row seat. If the vehicle is a 7-seat vehicle, the first seat mounting points 34 may be configured to mount an individual single seat.

Since the rear floor 1 has a blank area, it is necessary to enclose the blank area by means of the rear sheet metal part 3, which is connected to the rear floor 1 mainly by fasteners such as bolts, and some areas may be strengthened by welding. As shown in FIG. 6, after the mounting, the rear sheet metal part 3 can completely cover the blank area between the middle cross beam 30 and the rear cross beam 40, and can even further cover the rear cross beam 40. In this embodiment, a plurality of second seat mounting points 5 are arranged on the rear sheet metal part 3, and the plurality of second seat mounting points 5 are arranged at intervals in the transverse direction. The second seat mounting points 5 may be configured to mount the third row of seats, corresponding to the 7-seat vehicle. As shown in FIG. 6 and FIG. 7, the rear cross beam 40 is provided with a plurality of fastener mounting points 42 for connecting with the rear sheet metal part 3. A seat bracket 4 is connected to the rear sheet metal part 3. The seat bracket 4 is also provided with the second seat mounting point 5. The fastener mounting point 42 does not overlap with the second seat mounting point 5, and there is a spacing between the fastener mounting point 42 and the second seat mounting point 5 adjacent to each other, as shown in FIG. 7. In this way, after the seat is mounted onto the rear sheet metal part 3, when the vehicle encounters an impact, the seat may be pulled or collided, and in this case the impact force can be absorbed through sufficient deformation of the rear sheet metal part 3, so as to balance the force on the seat, the rear sheet metal part 3 and the rear floor 1, thereby better protecting the seat, the rear sheet metal part 3 and the rear floor 1 from damage.

Further, in order to prevent the rear floor 1 from being deformed during the gripping of the rear floor 1, the rear floor 1 in this embodiment is provided with a plurality of grip portions on the main body portion thereof for engaging with a gripping tool. During the transfer of the rear floor, for example, during the transfer of the rear floor in the electrophoresis process, the rear floor is connected to the gripping tool through the grip portions.

Specifically, as shown in FIG. 1 and FIG. 2, a first grip protrusion 12 is arranged at a position close to the front end of the left longitudinal beam 10, a first grip protrusion 22 is arranged at a position close to the front end of the right longitudinal beam 20, two second grip protrusions 32 are arranged at positions close to the rear of the middle cross beam 30, and two third grip protrusions 41 are provided on the rear cross beam 40. In this way, grip protrusions are arranged at positions close to four corners of the main body portion and in the middle of the main body portion. After the rear floor 1 is gripped, the main body portion of the rear floor 1 is subjected to relatively uniform forces, which can prevent the formation of a cantilever structure, thereby avoiding deformation.

Alternatively, the first grip portion may be arranged at a position where the middle cross beam and the longitudinal beam are connected to each other and the second grip protrusion may be omitted, as long as the rear floor is uniformly stressed after the gripping.

In addition, the first grip protrusion 12 and the first grip protrusion 22 in this embodiment may also be configured to mount the second row of seats.

Heretofore, the technical solutions of the disclosure have been described with reference to the preferred implementations shown in the accompanying drawings. However, those skilled in the art can readily understand that the scope of protection of the disclosure is apparently not limited to these specific implementations. Those skilled in the art can make equivalent changes or replacements to the related technical features without departing from the principles of the disclosure, and all the technical solutions after the changes or the replacements fall within the scope of protection of the disclosure.

## Claims

1. An integrated die-cast rear floor for a vehicle, comprising a main body portion and a reinforcement rib portion arranged on the main body portion, wherein the reinforcement rib portion comprises a plurality of reinforcement rib units, and at least some of the plurality of reinforcement rib units are arranged on a side of the main body portion facing a lower side of the vehicle.

2. The integrated die-cast rear floor for a vehicle according to claim 1, wherein the main body portion comprises a left longitudinal beam, a right longitudinal beam, a middle cross beam and a rear cross beam, and the reinforcement rib unit arranged on the side of the main body portion facing the lower side of the vehicle is arranged at least on the middle cross beam.

3. The integrated die-cast rear floor for a vehicle according to claim 1, wherein at least some of the reinforcement rib units arranged on the side of the main body portion facing the lower side of the vehicle extend downwards from a surface of the main body portion.

4. The integrated die-cast rear floor for a vehicle according to claim 2, wherein the left longitudinal beam and the right longitudinal beam respectively extend upwards at positions opposite each other to form a damper mounting portion.

5. The integrated die-cast rear floor for a vehicle according to claim 4, wherein the damper mounting portion comprises a left damper mounting portion formed on the left longitudinal beam, and a longitudinal dimension of the left damper mounting portion on a side close to the left longitudinal beam is greater than a longitudinal dimension of the left damper mounting portion on a side away from the left longitudinal beam; and/or
the damper mounting portion comprises a right damper mounting portion formed on the right longitudinal beam, and a longitudinal dimension of the right damper mounting portion on a side close to the right longitudinal beam is greater than a longitudinal dimension of the right damper mounting portion on a side away from the right longitudinal beam.

6. The integrated die-cast rear floor for a vehicle according to claim 4, wherein the damper mounting portion has a plurality of damper mounting points, and at least one of the plurality of damper mounting points is arranged such that a horizontal distance between the damper mounting point and the rear cross beam is greater than a horizontal distance between a rear edge line of the middle cross beam and the rear cross beam.

7. The integrated die-cast rear floor for a vehicle according to claim 2, wherein the left longitudinal beam, the right longitudinal beam and the middle cross beam are connected to from a notch.

8. The integrated die-cast rear floor for a vehicle according to claim 2, wherein the rear floor is provided with a first seat mounting point close to a front end thereof.

9. The integrated die-cast rear floor for a vehicle according to claim 2, wherein the vehicle further comprises a rear sheet metal part arranged on the rear floor, and the rear cross beam is connected to the rear sheet metal part through a fastener.

10. The integrated die-cast rear floor for a vehicle according to claim 9, wherein the rear cross beam is provided with at least one fastener mounting point for connecting with the rear sheet metal part, the rear sheet metal part is provided with at least one second seat mounting point, and the fastener mounting point does not overlap with the second seat mounting point.

11. The integrated die-cast rear floor for a vehicle according to claim 1, wherein the main body portion is provided with a plurality of grip portions for engaging with a gripping tool.

12. The integrated die-cast rear floor for a vehicle according to claim 11, wherein the grip portions are arranged at least at positions close to four corners of the main body portion.

13. A vehicle, comprising an integrated die-cast rear floor for a vehicle according to any one of claims 1 to 12.
